# EUROPÄISCHE PATENTSCHRIFT

(11) **EP 0 708 148 B1**
(45) Veröffentlichungstag und Bekanntmachung des Hinweises auf die Patenterteilung: **21.07.1999**
(21) Anmeldenummer: 95116563.8
(22) Anmeldetag: 20.10.1995
(51) Int. Cl.: C08L 67/04, C08L 67/02, C08L 97/02, C08L 101/00, C09J 167/00, C08J 3/00, C08J 9/00, B29D 7/01, B29C 49/04, B29C 63/00, B65D 30/02, D01F 6/92, D21H 17/71

(54) **Blasfolientaugliche Formmassen auf Basis abbaubarer aliphatischer Polyester**
For blown films usable moulding compositions based on degradable aliphatic polyesters
Compositions à mouler à base de polyesters aliphatiques dégradables aptes à produire des feuilles soufflées

(30) Priorität: 21.10.1994 DE 4437792
(43) Veröffentlichungstag der Anmeldung: 24.04.1996
(73) Patentinhaber: EMS-INVENTA AG, 8001 Zürich (CH)
(72) Erfinder: Buehler, Friedrich S., Dr, CH-7430 Thusis (CH); Fanelli, Raffaele, Dipl. chem. HTL, CH-7013 Domat/Ems (CH); Meier, Peter, Dr., CH-8820 Wädenswil (CH); Treutlein, Roland, Dipl. Ing. FH, CH-7418 Tomils (CH)
(74) Vertreter: Becker, Eberhard, Dr.

(56) Entgegenhaltungen:
- EP-A- 0 435 435
- EP-A- 0 526 858
- EP-A- 0 654 504
- WO-A-93/00399
- CHEMICAL ABSTRACTS, vol. 121, no. 24, 12. Dezember 1994, Columbus, Ohio, US; abstract no. 282117, & JP-A-6 143 412 (NIPPON UNICAR CO. LTD.) 24. Mai 1994
- CHEMICAL ABSTRACTS, vol. 119, no. 14, 4. Oktober 1993, Columbus, Ohio, US; abstract no. 140468, & JP-A-5 032 875 (NIPPON UNICAR CO. LTD.) 9. Februar 1993
- CHEMICAL ABSTRACTS, vol. 121, no. 16, 17. Oktober 1994, Columbus, Ohio, US; abstract no. 181233, & JP-A-6 166 782 (NIPPON UNICAR CO. LTD.) 14. Juni 1994
- CHEMICAL ABSTRACTS, vol. 122, no. 16, 17. April 1995, Columbus, Ohio, US; abstract no. 189857, & JP-A-6 263 954 (KURARAY CO.) 20. September 1994
- DATABASE WPI Week 9205, Derwent Publications Ltd., London, GB; AN 92-038635 & JP-A-3 285 930 (NIPPON UNICAR KK) 17. Dezember 1991
- GäCHTER, R. UND MüLLER H.: "Taschenbuch der Kunstoff-Additive" 1, 1989, HANSER VERLAG, MüNCHEN

## Beschreibung

Die Erfindung betrifft biologisch abbaubare, Blasfolien-taugliche Formmassen auf der Basis von biologisch abbaubaren aliphatischen Polyestern mit Schmelzpunkten unter 100°C und weiteren Polymeren, ein Verfahren zur Herstellung des Formmassen sowie deren Verwendung.

Aliphatische Polyester haben in der Regel Schmelzpunkte von unter 100°C, meistens unter 80°C mit Molekulargewichten von unter 100000 g/mol. Die Materialien sind weich und klebrig und werden deshalb meistens als Schmelzkleber verwendet. Die Verarbeitung zu Blasfolien ist bisher nicht möglich gewesen. Enthält der Polyester aromatische Monomere wie z.B. Terephthal- oder Isophthalsäure, steigt mit der Menge der Schmelzpunkt und die Blasfolienherstellbarkeit wird besser, allerdings geht dadurch die Bioabbaubarkeit verloren. Die biologische Abbaubarkeit von Kunststoffen ist ein Problem, das seit langem mit grossem Aufwand erforscht wird, da die Eigenschaft thermoplastischer Kunststoffe, über sehr lange Zeiträume beständig zu sein, schwere ökologische Probleme aufwirft.

Die meisten Polymermaterialien des täglichen Gebrauchs und für industrielle und landwirtschaftliche Anwendungen sind Erzeugnisse, die aus Blasfolien hergestellt sind. Leider zeigen die Polymeren, die zu Blasfolien, insbesondere auf konventionellen Blasfolienanlagen verarbeitet werden können, keine biologische Abbaubarkeit, während die biologisch abbaubaren aliphatischen Polyester der Blasfolienherstellung bisher nicht zugänglich sind.

Es gibt jedoch zahlreiche Anwendungsgebiete, wo der Einsatz von biologisch abbaubaren Kunststoffen sinnvoll ist, insbesondere dann, wenn damit ein Gesamtsystem biologisch abbaubar wird. Typische Beispiele dazu sind Kompostbeutel und Windeln.

Polycaprolacton (PCL) ist ein aliphatischer Polyester mit tiefem Schmelzpunkt, der vollständig biologisch abbaubar ist.

Polycaprolacton ist auf dem Markt erhältlich bis zu einem Durchschnittsmolekulargewicht von ca. 100000 g/mol. Kein Typ ist jedoch geeignet, Blasfolien direkt herzustellen. Die Erzeugung von Folien gelingt nur über das Flachfolienverfahren (JP 05/105771, JP 05/132572).

Für die Folienherstellung über eine Extrusions-Blasanlage, wie sie zur Herstellung von Beuteln und Tüten eingesetzt wird, liegt das besondere Verarbeitungsproblem in der niedrigen Schmelzstabilität des Polyesters, insbesondere des PCL und am tiefen Schmelzpunkt, der niedrige Verarbeitungstemperaturen erfordert.

Zur Herstellung von Blasfolien werden somit insbesondere an die Schmelzstabilität und an die Dehnfähigkeit der Schmelze höhere Anforderungen gestellt. Als bekanntes Beispiel für unterschiedliche Blasfolientauglichkeit ist der Vergleich PE mit PP anzuführen.

Um die nötigen Verarbeitungsstabilitäten und wirtschaftliche Produktionsgeschwindigkeiten zu erzielen, müssen andere thermoplastische Polymere zugesetzt werden. Wesentlich ist jedoch die Menge, die so ausgewähnt werden muß, daß die Verrottung des Folienmaterials, z.B. im Kompost, nicht beeinträchtigt wird.

In der Patentschrift JP 05/132572 A2/1993 werden polymere Zusätze für Polycaprolacton mit Gewichtsdurchschnittsmolekulargewichten von 70000 zur Herstellung von versteckten Flachfolien vorgeschlagen.

JP 04/148918 A2/1992 beschreibt die Herstellung von Blasfolien mit Polycaprolacton P 767. Es wurde von der Anmelderin der vorliegenden Erfindung in eigenen Versuchen jedoch festgestellt, daß es weder mit P 767 mit einem Mn-Bereich um 50000, noch mit P 787 mit einem Mn-Bereich um 80000 gelingt, die nötigen Schmelzstabilitäten sowie die nötigen Dehnfähigkeiten zu erreichen. Es ist zwar möglich, in einem sehr engen Verarbeitungsfenster einen Schlauch abzuziehen. Der Schlauch kann jedoch nicht aufgeblasen werden, so daß die üblichen Querverstreckungen in Verhältnissen von 1:2 - 1:4, bezogen auf den Düsenquerschnitt, nicht möglich sind.

JP 05/132572 A2/1993 beschreibt die Herstellung von Polycaprolactonen mit Gewichtsdurchschnittsmolekulargewichten von 10000 bis 500000. Handelsübliche Molekulargewichte liegen bei maximal 100000 g/mol, die für eine Blasfolienverarbeitung ungeeignet sind. Ob höhere Molekulargewichte für die Herstellung von Blasfolien geeignet sind, ist nicht bekannt.

Im weiteren wird beispielsweise in der JP 57185344 A/1982 ein Trägermaterial für Lack- und Agrarwirkstoffe mit PCL als Trägermaterial, das nicht als Blasfolie hergestellt ist, beschrieben.

Bekannt ist die Verwendung von Polycaprolacton in Kombination mit verschiedenen Polymeren für die Herstellung von orthopädischen Hilfsmitteln, wie Gipsverbänden oder Gipsschienen (WO 91/09909; US-A-4,661,535; KR-B-9301990; US-A-4,912,174).

Polycaprolacton-enthaltende polymere Formmassen eignen sich auch, um verschiedene Wirkstoffe, wie Insektizide, Fungizide, Repellentien u.a. kapselförmig zu umgeben (JP-069078).

Biologisch abbaubare Formmassen, die sich allerdings nicht zur Blasfolienherstellung eignen, sind aus EP-A-0 535 994 bekannt. Dort werden Formmassen gezeigt, die neben einem Polycaprolacton-Anteil zwingend destrukturierte bzw. gelatinierte Stärke enthalten.

WO 93/00399 beschreibt Blasfolien, in welchen thermoplastische Stärke zwingend vorgeschrieben ist. Diese Blasfolien weisen jedoch schlechte mechanische Eigenschaften sowie eine geringe Wasserresistenz auf. Zudem ist ein starker Einfluß der Feuchte auf die mechanischen Eigenschaften vorhanden.

Mechanisch verstreckte, biologisch abbaubare Flachfolien aus Polycaprolacton und Polyvinylalkohol sind aus US-A-5,200,247 bekannt.

In der WO 91/06601 sind Standardpolymere wie PE, PET, PS, PUR, PVC, PP, PC die Hauptkomponenten, die zur Verbesserung der Abbaubarkeit mit abbaufördernden Zusätzen ausgerüstet werden. Aliphatische Polyester dienen hier lediglich als Additiv (biodegradable safening materials), so daß sich die Verarbeitungseigenschaften der Blends von den Hauptkomponenten ableiten.

Die Produkte aus der DE-A-32 20 324 stellen eine Kunstharzmasse dar, die 100 Teile PCL + 10 bis 70 Teile Harz + 1 bis 30 Teile PVC enthalten. Zielanwendung ist hier ein Kernmaterial für Schuhe. Deshalb sind die Haupteigenschaften der Masse Biegebeständigkeit und Klebrigkeit, was sich bei der Blasfolienherstellung in jedem Fall negativ auf die Schlauchtrennung auswirkt.

EP-A-0 435 435 beschreibt eine biologisch desintegrierbare thermoplastische Harzzusammensetzung, welche eine Matrix eines biologisch abbaubaren, aliphatischen Polyesterharzes (25 bis 60 Gew.-%) umfaßt, die darin im wesentlichen einheitlich dispergiert, eine zweite thermoplastische Harzkomponente (40 bis 75 Gew.-%) aufweist, wobei das aliphatische Polyesterharz ein Polykondensat aus einer aliphatischen Polycarbonsäure mit einem aliphatischen Polyol und die zweite thermoplastische Harzkomponente ein Homopolymer oder ein Copolymer, abgeleitet von Olefinen, Styrolen, Vinylverbindungen, acrylischen Verbindungen, Lactamen und eine Kombination von Polycarbonsäuren und Polyaminen sind. Die zweite Komponente gemäß EP-A-0 435 435 besteht somit aus üblichen Kunststoffen, die nicht biologisch abbaubar sind. EP-A-0 435 435 beschreibt die Herstellung von einfach zu produzierenden 100 µm dicken Folien. Die Reißfestigkeit von derartigen Folien bei 65 Gew.-% Polycaprolacton (Vergleichsbeispiel 3) ist schlecht: 9,5 N/mm². Für 100 % Polycaprolacton wird kein Wert für die Reißfestigkeit angegeben. EP-A-0 435 435 offenbart somit, daß man mit Formmassen, die mehr als 60 Gew.-% Polycaprolacton enthalten, Folien mit Reißfestigkeiten unter 10 N/mm² erhält. Daraus ist erkennbar, daß man auch bei höheren Anteilen an Polycaprolacton keine brauchbaren Folieneigenschaften erwarten kann.

Aufgabe der Erfindung ist es daher, die Nachteile des vorskizzierten Standes der Technik zu vermeiden und Blasfolien-taugliche Formmassen, die die Herstellung von industriellen Erzeugnissen, insbesondere für die Landwirtschaft und für den täglichen Gebrauch gestatten, insbesondere solchen, die biologisch in vernünftigen Zeiträumen abbaubar sind, also verrotten, sowie ein Verfahren zu ihrer Herstellung, bereitzustellen.

Diese Aufgabe wird durch Formmassen gemäß Patentanspruch 1 gelöst. Vorteilhafte Ausgestaltungen ergeben sich aus den Unteransprüchen.

Insbesondere wird diese Aufgabe durch Formmassen bzw. thermoplastische Polymerblends auf der Basis abbaubarer aliphatischer Polyester mit Schmelzpunkten unter 100°C mit der Zusammensetzung:
- <I>: 75 bis 94,99 Gew.-% mindestens eines aliphatischen Polyesters oder Copolyesters aus mindestens einem Omega-Lacton oder mindestens einer Omega-Hydroxycarbonsäure, bevorzugt mit 4 bis 12 C-Atomen, und/oder aus aliphatischen Diolen, bevorzugt mit 2 bis 12 C-Atomen, und aliphatischen Dicarbonsäuren, bevorzugt mit 4 bis 12 C-Atomen;
- <II>: 25 bis 5 Gew.-% mindestens einer polymeren Hilfskomponente mit polaren Gruppen, ausgewählt aus der Gruppe Polyamid, Copolyesteramid, Polyurethan, Ethylen-Vinylalkohol-Copolymer, Ethylen-Vinylacetat-Copolymer, Ethylen-Acrylsäure-Copolymer, Polyvinylacetat, deren Copolymere und deren Mischungen;
und
- <III>: 1 bis 0,01 Gew.-% mindestens eines Additives aus der Gruppe polare Gleitmittel, polare Wachse, welche mit den Komponenten <I> und <II> verträglich sind, oder pyrogene Kieselsäuren, wobei sich die Komponenten <I>, <II> und <III> auf 100 Gew.-% ergänzen,
wobei die Blends bzw. Formmassen wahlweise weitere übliche Hilfsstoffe enthalten,
gelöst.

Überraschenderweise wurde nun gefunden, daß von verschiedenen polymeren Hilfskomponenten <II> nur wenige eine ausreichende Verträglichkeit zum PCL besitzen, um die notwendige Schmelzstabilität zur Blasfolienherstellung zu erzielen. Ebenso überraschend wurde gefunden, daß zum Erhalt genügend hoher mechanischer Festigkeiten in den Folien weitere Komponenten notwendig sind.

Aufgrund der niedrigen Verarbeitungstemperatur der aliphatischen Polyester besteht nur eine geringe Temperaturdifferenz zur Umgebungstemperatur. Die geringere Temperaturdifferenz führt zu Wärmeabführungsproblemen, die starke Instabilitäten der Folienschläuche verursachen und zum Verblocken der Folien führen. Die Lösung beinhaltet insbesondere geeignete Blend-Komponenten, mit deren Hilfe Polyester und besonders PCL so modifiziert werden kann, daß Folien auf Blasanlagen hergestellt werden können.

Somit ist, genauer ausgedrückt, die Lösung der Aufgabe die Bereitstellung von für die Blasfolienherstellung geeigneten Formmassen in Form von thermoplastischen Polymerblends, insbesondere auf der Basis von biologisch abbaubaren Kunststoffen, nämlich aliphatischen Polyestern, die als solche durch Blasformung nicht verarbeitbar sind, insbesondere auf der Basis von Lactonen und/oder Polyestern auf der Basis von aliphatischen Dicarbonsäuren und Diolen und/oder Hydroxycarbonsäuren, ihre Herstellung und ihre Verwendung.

Die aliphatischen Polyester <I> sind biologisch abbaubar und aus Lactonen und/oder aliphatischen Dicarbonsäuren und Diolen und/oder ω-Hydroxycarbonsäuren ausgewählt, die polymeren Hilfskomponenten <II> enthalten polare Gruppen, haben in bevorzugter Weise einen Schmelzpunkt von unter 170°C und sind aus der Gruppe Polyamid, Copolyesteramid, Polyurethan, Ethylenvinylalkoholcopolymere, Ethylenvinylacetatcopolymere, Ethylenacrylsäurecopolymere, Polyvinylacetat, gewählt sowie deren Copolymere und/oder Mischungen der Polymere und/oder Copolymere und die Additive (III) sind aus der Gruppe polarer Gleitmittel und/oder Wachse gewählt, die mit den aliphatischen Polyestern und/oder Copolyestern verträglich sind und/oder sind pyrogene Kieselsäuren, insbesondere Kieselsäureaerogele.

Zusätzlich zu den genannten 100% kann die Formmasse übliche Hilfsstoffe enthalten, wie Farbstoffe, Pigmente, Füllstoffe, Flammschutzmittel, Stabilisatoren, Modifikatoren und dergleichen.

Von besonderem Interesse ist die Verwendung der erfindungsgemäßen Formmassen für die Herstellung von Folien und Filmen, die als z.B. Kompostbeutel, Tragetüten oder Beutel aller Art, aber auch vielen anderen Erzeugnissen, wie Gemüse- und Fruchtverpackungen sowie Zeitschriften- und Buchverpackungen oder in aufgeschnittener Form als Windelfolie, insbesondere Windeldeckfolie, als Wickel und Streckfolien, Stretchfolien, Schrumpffolien, Klebefolien, Kaschierfolien, Textillaminaten, Holz- und Papierbeschichtungen, Dosierbeutel, Schädlingsfallen, Wirkstoffträgern für Gartenbau und Landwirtschaft, als Bindermassen zur Papierherstellung, zur Herstellung von Formmassen mit Naturfasern wie Holzschliff, Flachs, Chinagras, Altpapier und zur Modifizierung von abbaubaren Schäumen, Formschäumen und Schaumstoffchips, als Schmelzklebestoffe für Pulverapplikationen sowie zur Herstellung von Fasern, Geweben, Vliesen, insbesondere für den industriellen und landwirtschaftlichen Gebrauch sowie zur Herstellung von Schnüren, Garnen, Kabelbindern für Gartenbau und Landwirtschaft, als Blendkomponente zur Modifizierung von abbaubaren Werkstoffen, wie Stärkewerkstoff, Hydroxycarbonsäurepolyester, Polyesteramide, Polyurethanen, Zelluloseformmassen, Zelluloseacetatformmassen, Stärkeacetatformmassen, Polyvinylpyrrolidonformmassen, Polyestercarbonatformmassen und dergleichen weiter verarbeitet werden können. Der Vorteil der Erzeugnisse besteht darin, daß dieser Materialtyp in der Umwelt oder im Kompost verrottet. Ferner stellt ein folientaugliches aliphatisches Polyestermaterial eine ideale Blendkomponente für thermoplastische Stärken und andere abbaubare Polymere dar.

Das Verfahren zur Herstellung von Blends mit Hilfskomponenten, deren Schmelzpunkte über 150°C liegen, besteht darin, daß die polymeren Hilfskomponenten <II> und die Additive <III> und die ggf. enthaltenen Hiifsstoffe wahlweise mit maximal 30 Gew.-% Polyester vorextrudiert und zu Vorgranulat verarbeitet werden und in einem zweiten Schritt dann dieses Vorgranulat mit dem Polyester <I> resp. der Restmenge Polyester <I> zum Granulat extrudiert oder direkt weiterverarbeitet wird.

Vorzugsweise werden die hochschmelzenden Hilfskomponenten <II> und die Additive <III> im Extruder (erste Hälfte der Schnecke) aufgeschmolzen und über einen Seitenextruder (zweite Hälfte der Schnecke) der Polyester <I> in die Schmelze zugemischt.

Ebenfalls vorzugsweise wird das Vorgranulat aus Schritt 1 als Granulatmischung mit Polycaprolacton oder mit anderen thermoplastisch verarbeitbaren biologisch abbaubaren Polymeren direkt zu Blasfolien verarbeitet.

Da die Polycaprolactontypen CAPA 650, CAPA 680 und Tone P 787 nicht zu Blasfolien verarbeitet werden konnten, wurden über Zweiwellenextruder verschiedene Granulatmischungen und Compounds hergestellt. Diese Granulatmischungen und Compounds wurden auf einer Folienblasanlage der Fa. Collin verarbeitet, auf mechanische Eigenschaften untersucht und die Beuteleigenschaften festgestellt. Ideale Hilfskomponenten <II> sind Copolyamide im Schmelzbereich von 80-160°C, Ethylenacrylsäurecopolymere mit Schmelzpunkten von 60 bis 100°C, Polyesterurethane, die vorzugsweise aliphatische Polyesterdiole enthalten und niedrig schmelzende Ethylenvinylalkoholcopolymere mit Ethylengehalten zwischen 40 und 60 Gew.-%, die dann einen Schmelzbereich von ca. 150-170°C haben.

Als weitere aussichtsreiche polymere Hilfskomponenten <II> können Polyester, Polyamid, Copolyamid, Polyurethan, insbesondere PUR mit Polycaprolacton-Weichsegmenten eingesetzt werden. Da in den wenigsten Fällen nur eine Hilfskomponente ausreicht, sind vor allem auch die Mischungen mit abgestuften Verträglichkeiten von Interesse.

Eine Verbesserung der Homogenität wird erzielt, wenn die polymeren Hilfskomponenten <II> mit ähnlichen Schmelzpunkten zusammen vorextrudiert und in einem zweiten Schritt oder in der zweiten Hälfte der Extruderschnecke mit Polycaprolacton compoundiert werden. Besitzen alle Komponenten ähnliche Schmelzpunkte oder sind sie teilweise ineinander löslich, kann die Granulatherstellung direkt erfolgen. In diesen Fällen ist sogar eine Folienherstellung direkt aus der Granulatmischung möglich.

Das Polycaprolacton oder andere aliphatische Polyester, die sonst nicht zu Blasfolien zu verarbeiten sind, werden im Überschuß zwischen 75 und < 95% eingesetzt. Die zur Verarbeitung notwendigen Polymerzusätze werden zu 25-5% eingesetzt. Zur Reduktion der Klebeneigung können Gleitmittel aller Art in Gewichtsanteilen von 0,1 bis 1% eingesetzt werden. Besonders wirksam sind Polyesterwachse, Polyamidwachse sowie polare Wachse natürlicher Herkunft.

Die Reduktion des Trennproblems kann auch auf mechanische Art erfolgen, z.B. durch Zugabe von mineralischen kugelförmigen Trennmitteln wie pyrogene Kieselsäuren, insbesondere Kieselsäureaerogele, z.B. Aerosil und Silwett in Mengen von 0,01 bis 0,1 Gew.-%.

Besonders interessant sind Zusammensetzungen aus Polycaprolacton und Polyesterurethan, die in einer Zusammensetzung von 84/16 Gewichtsprozenten nach dem Kaltverstrecken den Blasfolien ein brilliant transparentes Aussehen verleihen und vor allem im Bereich flexibler hochtransparenter Schutzfolien eingesetzt werden können. Biologisch abbaubares Polycaprolacton und mikrobiell "labiles" Polyesterurethan, insbesondere mit Polycaprolactondiol Weichsegmenten und aliphatischen Diisocyanat Hartsegmenten, stellen eine technisch hochwertige Alternative für kompostierfähige Folien dar.

Anstelle der Isocyanat-Hartblöcke, die die elastomeren Weichsegmente thermoplastisch vernetzen, sind auch andere kristallisationsfähige Blockkomponenten mit Vorteil verwendbar, insbesondere Polyester und Polyamide mit Schmelzpunkten oberhalb 100°C. Idealerweise wählt man Monomere, die zwischen den Ester- oder Amidgruppen 2-6 C-Atome besitzen.

Führt man die Extrusion der aliphatischen Polyester mit den Polyesterurethanen oder Polyesteramiden bei höheren Temperaturen aus, z.B. höher als 200°C, können Umesterungs- oder Umamidierungsprozesse stattfinden, so daß die aliphatischen Polyester in die segmentierten Blockpolymere miteingebaut werden können. Auf diese Weise kann man das eingesetzte Material so modifizieren, daß es alle erwünschten Eigenschaften hat. Wenn man daraus ein Granulat bildet, kann der Abnehmer dieses direkt für die Blasformung einsetzen.

Die folgenden Beispiele erläutern die Erfindung.

Rezeptur und Verarbeitungsbeispiele sind in Tabelle 1 und 2 zusammengestellt. Die in Klammern stehenden Komponenten wurden jeweils vorextrudiert und im Anschluß als Granulatmischung mit dem Polycaprolacton direkt zur Folie verarbeitet.

In Beispiel 18 steht die Klammer für Ethylvinylalkohol dafür, daß 80 Gew.-% Ethylvinylalkohol mit 20 Gew.-% Glycerin vorextrudiert wurden.

### Beispiel 1 - 3 (Tab. 1)

Polycaprolacton des Typs CAPA 650, CAPA 680 und Tone P 787 werden nacheinander auf einer Blasfolienanlage verarbeitet. In verschiedenen Temperaturprofilen im Bereich von 70 - 100°C konnten für verschiedene Extruderdrehzahlen und Abzugsgeschwindigkeiten stabile Extrusionsbedingungen erreicht werden. Steigt die Düsentemperatur über 120°C, ist die Schmelzestabilität bei voller Kühlleistung so gering, daß der Schlauch unter dem Eigengewicht abreißt. Bei Temperaturen unter 70°C wird die Schmelze wachsartig und läßt sich nicht mehr aufblasen.
Im Beispiel 2b wurde ein spezielles CAPA 650, das für die Folienherstellung durch Pfropfen mit Maleinsäureanhydrid modifiziert wurde (Fa. Interrox) getestet. Das Material konnte ebenfalls nicht aufgeblasen werden und ist für die Blasfolienherstellung ungeeignet.

### Beispiel 4 - 5 (Tab. 1)

Die Kombination von Ethylenacrylsäurecopolymer (EAA) (Primacor) und Copolyamid (CoPA) (CF 6S) (Ems Chemie) zeigt eine gute Verarbeitbarkeit mit leichten Homogenitätsproblemen. Zur Beurteilung der Schweißbarkeit wurden Beutel hergestellt. Die Beutel wurden mit Preßluft gefüllt und zum Platzen gebracht. Im zweiten Test wurden die Beutel mit Wasser gefüllt und die Menge gemessen, bei der der Beutel platzt.
- F:: Folie versagt
- N:: Naht versagt

### Beispiel 6 (Tab. 1)

Das zusätzliche Einbringen einer Polyesterurethankomponente verbessert die Homogenität der Folie, führt aber zu sehr unterschiedlichen Festigkeiten in Längs- und Querrichtung. Diese Variante besitzt eine hervorragende Verarbeitbarkeit und ist für die Herstellung von Blasfolien geeignet.

### Beispiel 7 (Tab. 1)

EAA ist alleine nicht in der Lage, die Verarbeitbarkeit von PCL in eine brauchbare Größenordnung zu bringen. Es treten deutliche Probleme auf im Bereich der Homogenität und insbesondere der Schlauchstabilität. Starkes Pulsieren verhindert die Herstellung einer Blasfolie.

### Beispiel 8a (Tab. 1)

Die Kombination PCL und Polyesterurethan führt zu sehr guten mechanischen Festigkeiten unter vollständiger Ausnutzung der Dehnfähigkeit des PCL. Die Schlauchstabilität ist wegen starkem Pulsieren ungenügend.

In Beispiel 8b wurden die beiden Komponenten vorextrudiert und im zweiten Schritt zur Blasfolie verarbeitet. Dadurch wird die Schlauchstabilität während der Verarbeitung deutlich verbessert, obwohl die mechanischen Werte etwas abfallen. Im Beutelfülltest werden deutlich größere Mengen Wasser bewältigt. Diese Variante eignet sich insbesondere zum Abmischen mit thermoplastischer Stärke und zeigt bei 20% (bezogen auf Gesamtmasse) eine mit 460 N/mm (im Trockenzustand) extrem hohe Weiterreißfestigkeit in Längsrichtung.

### Beispiel 9 (Tab. 2)

Eingesetzt wurden neben Lucalen (modifiziertes PE) ein mit Maleinsäureanhydrid gepfropftes Polycaprolacton. Dadurch läßt sich eine gute Verträglichkeit von PCL zu Lucalen herstellen. Die Probleme im Bereich der Schlauchstabilität können aber nicht beseitigt werden.

### Beispiel 10 (Tab. 2)

Ethylenvinylalkohol und zwei Polyesterurethanvarianten werden zusammen mit dem Amidwachs Amid E vorextrudiert und anschließend mit Tone P 787 als Granulatmischung zur Folie extrudiert. Dadurch wird ein sehr gutes Verarbeitungsverhalten erreicht. Die Folien besitzen sehr gute Längs- und Querfestigkeiten mit sehr guten Beuteleigenschaften, s. z.B. Wasserfülltest.

### Beispiel 11 (Tab. 2)

CoPA (CF 6S), EVAL und ein Polyesterurethan werden vorextrudiert und zusammen mit PCL als Granulatmischung zur Folie verarbeitet. Trotz sehr guter Beuteleigenschaften treten Probleme in der Homogenität und der Schlauchstabilität auf. Die mechanischen Endeigenschaften dieser Folie sind jedoch sehr gut.

### Beispiel 12 (Tab. 2)

Analog zu Beispiel 10, jedoch ohne Vorextrusion und ohne Gleitmittel. Diese Variante zeigt deutiiche Nachteile in der Schlauchstabilität und besitzt gegenüber Beispiel 10 die geringeren mechanischen Eigenschaften.

### Beispiel 13 - 17 (Tab. 2)

Tone P 787 zeigt in Verbindung mit EAA (Primacor 5980) sehr gute mechanische Eigenschaften der Folien, ist für die Folienherstellung aufgrund des unstabilen Verhaltens des Schlauches jedoch ungeeignet. Beispiel 15 - 17 zeigen unbefriedigende Schlauchstabilität.

### Beispiel 18 (Tab. 2)

Analog Beispiel 10 und Beispiel 12. Hier wurden 80 Gew.-% Ethylvinylalkohol (EVOH) mit 20 Gew.-% Glycerin vorextrudiert und anschließend als Granulatmischung mit den übrigen Bestandteilen gemäß Tab. 2 zu Blasfolien verarbeitet. Die Folienherstellung verläuft sehr gut, wobei hohe mechanische Festigkeiten erzielt werden in Verbindung mit einer sehr hohen Weiterreißfestigkeit, aber nur ein mittelmäßiges Wasserfüll-Ergebnis.

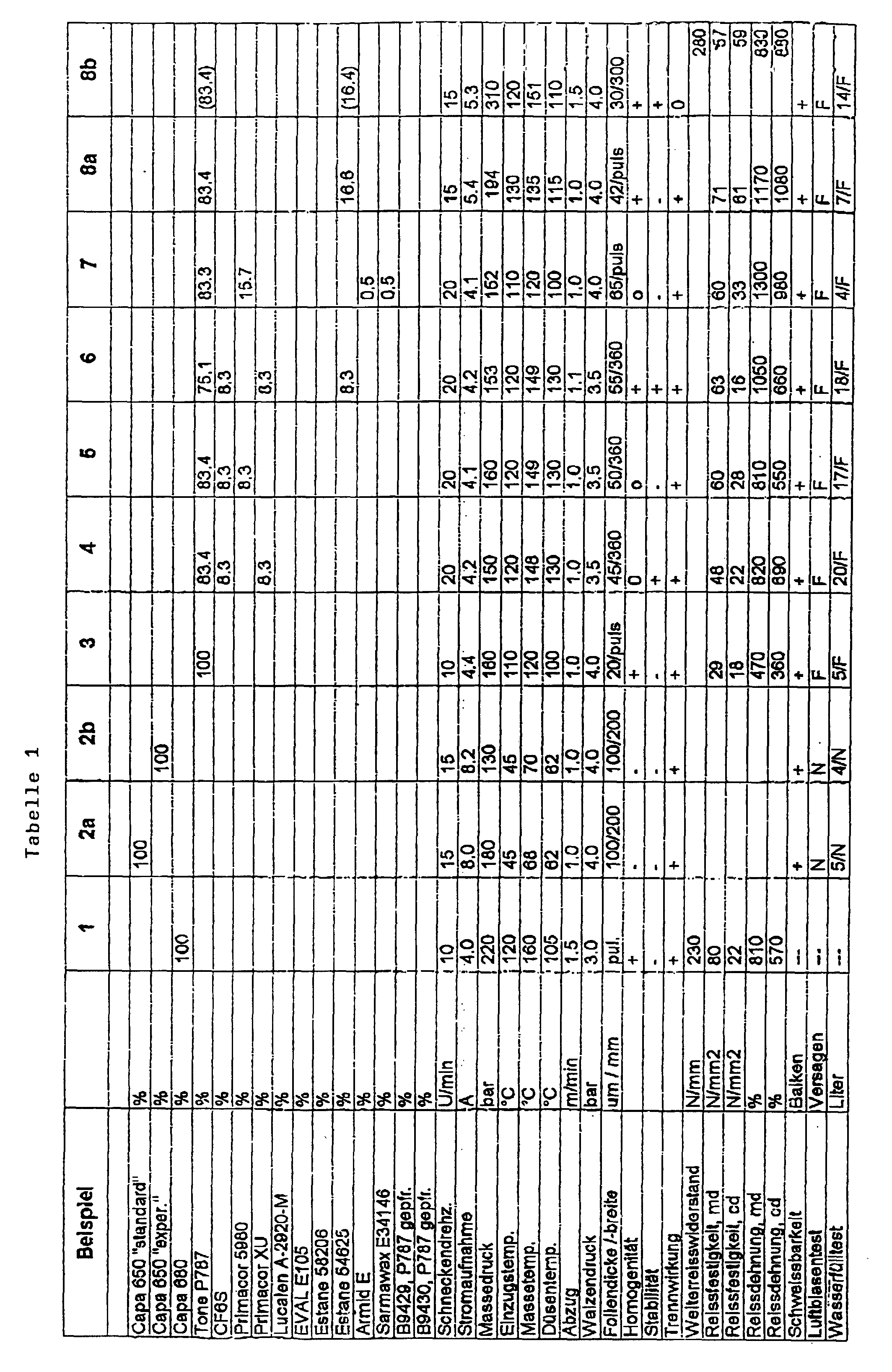

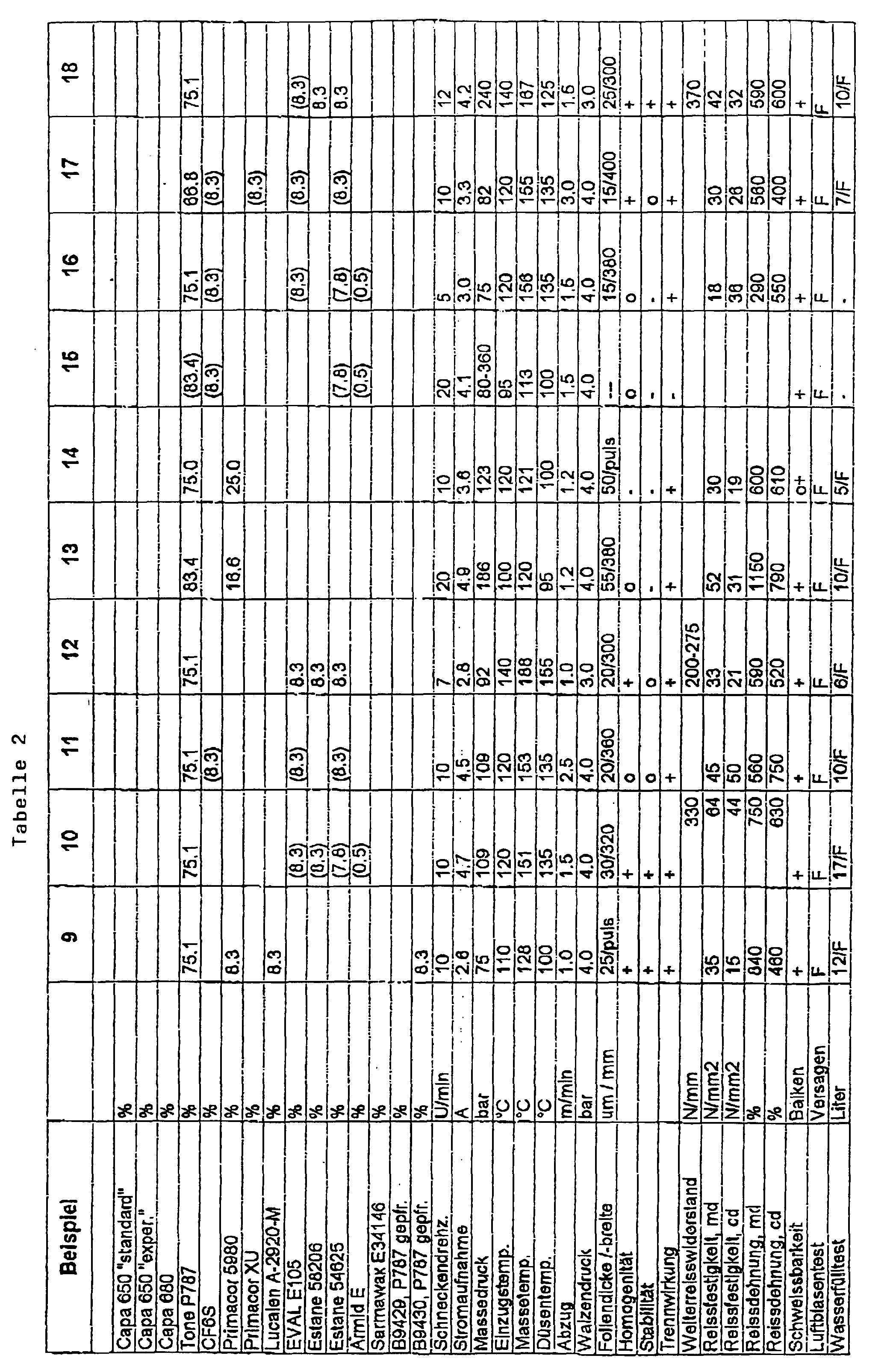

Die in den Beispielen benutzten und in Tabelle 1 und 2 aufgeführten Kunststoffe, die dort mit ihrem Handelsnamen bezeichnet sind, sind im einzelnen die folgenden:

| | | |
|---|---|---|
| PCL | Polycaprolacton | Mn 50'000 - 100'000 |
| Stärkewerkstoff | thermoplastisches Stärkegranulat | |
| PE | Polyethylen | handelsüblich |
| PP | Polypropylen | " |
| PS | Polystyrol | " |
| PAN | Polyacrylnitril | " |
| PB | Polybutadien | " |
| PI | Polyisopren | " |
| PU | Polyurethan | " |
| EAA | Polyethylenacrylsäure | " |
| CoPA (CF6S) | Copolyamid 6/12 (EMS-Chemie) | " |
| EVAL = EVOH | Ethylenvinylalkohol | Ethylengehalt 44 % |

| | | |
|---|---|---|
| CAPA 650 | Polycaprolacton | Mn 50'000 g/mol |
| CAPA 650 "Exp" | " | Modifikat (Interox) |
| CAPA 680 | " | Mn 80'000 g/mol |
| TONE P787 | " | Mn 80'000 - 100'000 |
| | | g/mol |
| CF6S | Copolyamid 6/12 | EMS-Chemie |
| Primacor 5980 | Ethylenacrylsäure | DOW |
| Primacor XU | " | " |
| Lucalen A2920M | Polyethylen gepfropft | BASF |
| EVAL E105 | Ethylenvinylalkohol (44 % Ethylen) | Kuraray |
| Estane 58206 | Polyesterurethan | Goodrich |
| Estane 54625 | " | " |
| Armid E | Amidwachs | Akzo |
| Sarmawax E34146 | Wachstyp unbekannt | Sandoz/Italien |
| B9429, P787 gepfropft | Polycaprolacton gepfropft (Maleinsäureanhydrid) | EMS-Chemie |
| B9430, P787 gepfropft | " | " |

## Patentansprüche

1. Biologisch abbaubare, blasfolien-taugliche Formmassen auf der Basis von biologisch abbaubaren aliphatischen Polyestern und weiteren Polymeren, dadurch gekennzeichnet, daß sie zusammengesetzt sind aus den Komponenten
<I> 75 bis 94,99 Gew.-% mindestens eines aliphatischen Polyesters oder Copolyesters aus mindestens einem Omega-Lacton oder mindestens einer Omega-Hydroxycarbonsäure und/oder aus aliphatischen Diolen und aliphatischen Dicarbonsäuren,
<II> 25 bis 5 Gew.-% mindestens einer oder mehreren polymeren Hilfskomponenten mit polaren Gruppen, ausgewählt aus der Gruppe Polyamid, Copolyesteramid, Polyurethan, Ethylen-Vinylalkohol-Copolymer, Ethylen-Vinylacetat-Copolymer, Ethylen-Acrylsäure-Copolymer, Polyvinylacetat, deren Copolymere und deren Mischungen,
und
<III> 1 bis 0,01 Gew.-% mindestens eines Additivs aus der Gruppe polare Gleitmittel, polare Wachse, welche mit den Komponenten <I> und <II> verträglich sind, pyrogene Kieselsäuren, wobei sich die Komponenten <I>, <II> und <III> auf 100 Gew.-% ergänzen,
wobei die Formmassen wahlweise weitere übliche Hilfsstoffe enthalten.

2. Formmassen nach Anspruch 1, dadurch gekennzeichnet, daß die Hilfsstoffe ausgewählt sind aus der Gruppe Farbstoffe, Pigmente, Füllstoffe, Flammschutzmittel, Stabilisatoren, Modifikatoren.

3. Verfahren zur Herstellung der Formmassen gemäß Anspruch 1 oder 2, dadurch gekennzeichnet, daß in einem ersten Schritt die Hilfskomponenten <II> mit Schmelzpunkten über 150°C mit den Additiven <III> und wahlweise einer geringen Menge des Polyesters <I> von maximal 30 Gew.-% der Gesamtmenge des Polyesters gemischt und zu einem Vorgranulat extrudiert und in einem zweiten Schritt mit dem Polyester <I>, resp. seiner Restmenge zu einem Endgranulat extrudiert werden, welches nachfolgend direkt weiterverarbeitet oder vor der Weiterverarbeitung ausgetragen und granuliert wird.

4. Verfahren nach Anspruch 3, dadurch gekennzeichnet, daß im zweiten Verfahrensschritt der Polyester <I> über ein separates Aufschmelzaggregat in die Schmelzemischung aus dem ersten Verfahrensschritt eingebracht wird.

5. Verfahren nach Anspruch 4, dadurch gekennzeichnet, daß man als Aufschmelzaggregat einen Extruder verwendet.

6. Verfahren nach einem der Ansprüche 3 bis 5, dadurch gekennzeichnet, daß die Weiterverarbeitung unter Zusatz von mindestens einem weiteren Polymer erfolgt.

7. Verfahren nach Anspruch 6, dadurch gekennzeichnet, daß das weitere Polymer biologisch abbaubar und thermoplastisch verarbeitbar ist.

8. Verfahren nach einem der Ansprüche 3 bis 7, dadurch gekennzeichnet, daß das Endgranulat direkt zu Blasfolien weiterverarbeitet wird.

9. Verwendung der Formmassen gemäß einem der Ansprüche 1 oder 2, zur Herstellung von Blasfolien.

10. Verwendung der Formmassen gemäß Anspruch 9, dadurch gekennzeichnet, daß man die Blasfolien zu Beuteln, wie Kompostbeuteln, Tragetüten, Gemüse- oder Fruchtverpackungen oder zu Zeitschriften- und Buchverpackungen, Dosierbeuteln, Schädlingsfallen oder Wirkstoffträgern für Gartenbau und Landwirtschaft weiterverarbeitet.

11. Verwendung der Formmassen gemäß Anspruch 10, zur Herstellung von aufgeschnittenen Blasfolien, wie Windeldeckfolien, Wickel- und Streckfolien, Stretch-Folien oder Schrumpffolien, Klebefolien, Kaschierfolien, Textillaminaten, Holz- und Papierbeschichtungen.

12. Verwendung der Formmassen gemäß einem der Ansprüche 1 oder 2, zur Herstellung von Blasfolien, dadurch gekennzeichnet, daß sie zu Fasern, Geweben, Vliesen für den industriellen und landwirtschaftlichen Gebrauch, sowie von Schnüren, Garnen, Kabelbindern, insbesondere für Gartenbau und Landwirtschaft weiterverarbeitet werden.

13. Verwendung der Formmassen gemäß einem der Ansprüche 1 oder 2, als Blendkomponente zur Modifizierung von abbaubaren Werkstoffen, wie Stärkewerkstoff, Hydroxycarbonsäurepolyester, Polyesteramide, Polyurethane, Celluloseformmassen, Stärkeacetatformmassen, Polyvinylpyrrolidonformmassen, Polyestercarbonatformmassen zur Herstellung von Blasfolien.

14. Verwendung der Formmassen gemäß einem der Ansprüche 1 oder 2, zur Herstellung von Blasfolien, dadurch gkennzeichnet, daß man die geschnittenen Blasfolien als Binder zur Papierherstellung zur Herstellung von Polymerblends mit Naturfasern, wie Holzschliff, Flachs, Chinagras, Altpapier verwendet.

15. Verwendung der Formmassen gemäß einem der Ansprüche 1 oder 2, dadurch gekennzeichnet, daß man die Blasfolien zu abbaubaren Schäumen, Formschäumen und Schaumstoffchips weiterverarbeitet.

16. Verwendung der Formmassen gemäß einem der Ansprüche 1 oder 2, zur Herstellung von Blasfolien, dadurch gekennzeichnet, daß man die aufgeschnittenen Blasfolien als Schmelzklebstoff verwendet.

## Claims

1. Biodegradable moulding compositions which are suitable for blown films and are based on biodegradable aliphatic polyesters and on other polymers, characterized in that the components in the formulation are
<I> from 75 to 94.99% by weight of at least one aliphatic polyester or of a copolyester made from at least one omega-lactone or from at least one omega-hydroxycarboxylic acid and/or made from aliphatic diols and aliphatic dicarboxylic acids,
<II> from 25 to 5% by weight of at least one or more polymeric auxiliary components having polar groups, selected from the class consisting of a polyamide, a copolyesteramide, a polyurethane, an ethylene-vinyl alcohol copolymer, an ethylene-vinyl acetate copolymer, an ethylene acrylic acid copolymer, a polyvinyl acetate, copolymers of these and mixtures of these,
and
<III> from 1 to 0.01% by weight of at least one additive selected from the class consisting of polar lubricants, polar waxes which are compatible with components <I> and <II> and pyrogenic silicas, where the total of components <I>, <II> and <III> is 100% by weight,
where the moulding compositions may, if desired, comprise other conventional auxiliaries.

2. Moulding compositions according to Claim 1, characterized in that the auxiliaries have been selected from the class consisting of dyes, pigments, fillers, flame retardants, stabilizers and modifiers.

3. Process for preparing the moulding compositions in accordance with Claim 1 or 2, characterized in that, in a first step, the auxiliary components <II> with melting points above 150°C are mixed with the additives <III> and, if desired, with a small amount of the polyester <I> of not more than 30% by weight of the total amount of the polyester and extruded to give pellets of preproduct and, in a second step, are extruded with the polyester <I> or, as appropriate, the residual amount thereof, to give pellets of an end product which is then directly further processed or is discharged and pelletized before further processing.

4. Process according to Claim 3, characterized in that, in the second process step, the polyester <I> is introduced via a separate melting apparatus into the melt mixture from the first process step.

5. Process according to Claim 4, characterized in that the melting apparatus used is an extruder.

6. Process according to one of Claims 3 to 5, characterized in that the further processing is carried out with addition of at least one other polymer.

7. Process according to Claim 6, characterized in that the further polymer is biodegradable and processible as a thermoplastic.

8. Process according to one of Claims 3 to 7, characterized in that the pellets of the end product are directly further processed to give blown films.

9. Use of the moulding compositions according to one of Claims 1 or 2 for producing blown films.

10. Use of the moulding compositions according to Claim 9, characterized in that the blown films are further processed to give bags, such as compost sacks, carrier bags or packaging for vegetables or fruit, or to give packaging for journals and books, or to give metering bags, pest traps or active ingredient carriers for horticulture or agriculture.

11. Use of the moulding compositions according to Claim 10 for producing slit blown films, such as outer films for nappies, wrapping and stretch-wrapping films, stretch films or shrink films, adhesive films, laminating films, textile laminates or coatings for wood or paper.

12. Use of the moulding compositions according to one of Claims 1 or 2 for the production of blown films, characterized in that they are further processed to give fibres, wovens or nonwovens for industrial or agricultural use, or of cords, yarns or cable ties, in particular for horticulture or agriculture.

13. Use of the moulding compositions according to one of Claims 1 or 2 as a blend component for modifying degradable materials, such as starch material, hydroxycarboxylic acid polyesters, polyesteramides, polyurethanes, cellulose moulding compositions, starch acetate moulding compositions, polyvinylpyrrolidone moulding compositions or polyestercarbonate moulding compositions for producing blown films.

14. Use of the moulding compositions according to one of Claims 1 or 2 for producing blown films, characterized in that the slit blown films are used as a binder for papermaking for preparing polymer blends with naturally occurring fibres, such as mechanical wood pulp, flax, china grass or recycled paper.

15. Use of the moulding compositions according to one of Claims 1 or 2, characterized in that the blown films are further processed to give degradable foams, moulded foams or foam chips.

16. Use of the moulding compositions according to one of Claims 1 or 2 for producing blown films, characterized in that the slit blown films are used as a hot-melt adhesive.

## Revendications

1. Compositions biodégradables pouvant être mises en forme, à base de polyesters aliphatiques biodégradables et d'autres polymères, qui sont appropriées pour la fabrication de films soufflés, caractérisées en ce qu'elles sont constituées des composés suivants
<I> au moins 75 à 94,99 % en poids d'un polyester aliphatique ou d'un copolyester d'au moins un oméga-lactone ou d'au moins un acide oméga-hydroxycarboxylique et/ou de diols aliphatiques et d'acides dicarboxyliques,
<II> au moins 25 à 5 % en poids d'un ou de plusieurs composés polymères auxiliaires contenant des groupes polaires choisis dans le groupe des polyamides, des amides de copolyester, des polyuréthanes, des copolymères d'alcool vinylique d'éthylène, des copolymères d'acétate vinylique d'éthylène, des copolymères d'éthylène-acide acrylique, des acétates de polyvinyle, de leurs copolymères et de leurs mélanges,
et
<III> au moins 1 à 0,01 % en poids d'un additif du groupe des lubrifiants polaires, des cires polaires, qui sont compatibles avec les composés <I> et <II>, d'acides siliciques pyrogénés, les composés <I>, <II> et <III> se complétant à 100 % en poids,
les compositions pouvant être mises en forme contenant facultativement d'autres additifs usuels.

2. Compositions pouvant être mises en forme selon la revendication 1, caractérisées en ce que les additifs sont choisis dans le groupe des colorants, des pigments, des matières de charge, des agents anti-flamme, des stabilisateurs, des modificateurs.

3. Procédé destiné à la fabrication des compositions pouvant être mises en forme selon la revendication 1 ou 2, caractérisé en ce que, dans une première phase, les composés auxiliaires <II> ayant des points de fusion supérieurs à 150 °C sont mélangés avec les additifs <III>, et facultativement avec une faible quantité du polyester <I> de 30 % en poids maximal de la quantité totale du polyester, et extrudés en un granulat préliminaire, et en ce que dans une deuxième phase, ils sont extrudés avec le polyester <I> ou sa quantité résiduelle en un granulat définitif, qui est ensuite directement transformé ou évacué et granulé avant la transformation ultérieure.

4. Procédé selon la revendication 3, caractérisé en ce que, dans la deuxième phase de procédé, le polyester <I> est introduit dans le mélange fondu de la première phase de procédé par l'intermédiaire d'un appareil de fusion séparé.

5. Procédé selon la revendication 4, caractérisé en ce qu'une extrudeuse est utilisée en tant qu'appareil de fusion.

6. Procédé selon l'une des revendications 3 à 5, caractérisé en ce que la transformation ultérieure est effectuée par l'ajout d'au moins un autre polymère.

7. Procédé selon la revendication 6, caractérisé en ce que l'autre polymère est biodégradable et peut être transformé par voie thermoplastique.

8. Procédé selon l'une des revendications 3 à 7, caractérisé en ce que le granulat définitif est directement transformé en films soufflés.

9. Utilisation des compositions pouvant être mises en forme selon l'une des revendications 1 ou 2 pour la fabrication de films soufflés.

10. Utilisation des compositions pouvant être mises en forme selon la revendication 9, caractérisée en ce que les films soufflés sont transformés en sacs tels que des sacs pour compost, des sachets, des emballages de fruits ou légumes, ou des emballages de revues et de livres, des sachets doseurs, des pièges à parasites ou des supports de substances actives pour l'horticulture et l'agriculture.

11. Utilisation des compositions pouvant être mises en forme selon la revendication 10 pour la fabrication de films soufflés découpés tels que des films de protection de couches, des films enroulés ou étirés, des films stretchs ou rétractables, des films adhésifs, des films de contrecollage, des laminés textiles, des revêtements de bois et de papier.

12. Utilisation des compositions pouvant être mises en forme selon l'une des revendications 1 ou 2 pour la fabrication de films soufflés, caractérisée en ce qu'elles sont transformées en fibres, textures, non-tissés destinés à être utilisés dans l'industrie et l'agriculture, ainsi qu'en cordes, fils, attaches de câbles, notamment pour l'horticulture et l'agriculture.

13. Utilisation des compositions pouvant être mises en forme selon l'une des revendications 1 ou 2 pour la fabrication de films soufflés en tant que composés blends pour la modification de matières dégradables telles que des matières à base d'amidon, des polyesters d'acides hydroxycarboxyliques, des amides de polyester, des polyuréthanes, des matières pouvant être mises en forme à base de cellulose, des matières pouvant être mises en forme à base d'acétate d'amidon, des matières pouvant être mises en forme à base de polyvinylpyrrolidone, des matières pouvant être mises en forme à base de carbonate de polyester.

14. Utilisation des compositions pouvant être mises en forme selon l'une des revendications 1 ou 2 pour la fabrication de films soufflés, caractérisée en ce que les films soufflés découpés sont utilisés comme liants pour la fabrication de papier, pour la fabrication de blends polymères contenant des fibres naturelles telles que de la pâte à bois, du lin, de la ramie, du vieux papier.

15. Utilisation des compositions pouvant être mises en forme selon l'une des revendications 1 ou 2, caractérisée en ce que les films soufflés sont transformés en mousses dégradables, en mousses pouvant être mises en forme et en chips de mousse.

16. Utilisation des compositions pouvant être mises en forme selon l'une des revendications 1 ou 2 pour la fabrication de films soufflés, caractérisée en ce que les films soufflés découpés sont utilisés en tant que colle fusible.
